(19) Europäisches Patentamt
European Patent Office
Office européen des brevets

(11) **EP 2 822 290 B1**

(12) **EUROPEAN PATENT SPECIFICATION**

(45) Date of publication and mention
of the grant of the patent:
**06.03.2019 Bulletin 2019/10**

(51) Int Cl.:
*H04Q 9/00* *(2006.01)*  *G01D 4/00* *(2006.01)*
*H04W 48/12* *(2009.01)*  *H04W 84/18* *(2009.01)*

(21) Application number: **13174842.8**

(22) Date of filing: **03.07.2013**

(54) **Meter network nodes with beacon signal comprising signal data**

Messgerätenetzwerkknoten mit Bakensignal mit Signaldaten

Noeuds de réseau de compteur avec signal de balise comprenant des données de signal

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.01.2015 Bulletin 2015/02**

(73) Proprietor: **KAMSTRUP A/S
8660 Skanderborg (DK)**

(72) Inventors:
• **Hald, Flemming
8370 Hadsten (DK)**

• **Christiansen, Johnny Dørken
8464 Galten (DK)**

(74) Representative: **Plougmann Vingtoft a/s
Strandvejen 70
2900 Hellerup (DK)**

(56) References cited:
**WO-A2-2008/033514      US-A1- 2003 016 142
US-A1- 2007 013 547**

**Description**

**FIELD OF THE INVENTION**

The present invention relates to communication networks of consumption meters. In particular, the invention relates to use of beacon signals in consumption meter networks.

**BACKGROUND OF THE INVENTION**

Consumption meters for measuring consumption data of a supplied utility, for example electricity meters, heat meters for district heating, and water meters for cold water, are often equipped with a communication unit for remote communication with the meter and capabilities of being arranged in a communication network. Network enabled consumption meters greatly facilitates data collection, and renders possible network communication between the meters and the data collection facility for a number of purposes.

A network of consumption meters may comprise a large number of individual units since every household in an area may contain one or more meters which communicate data back to a central unit. It is normally a considerable task to handle the data flow to ensure a stable communication network.

Communication networks for consumption meters are typically of a hierarchal type where the communication nodes are arranged in a tree structure, possibly hybridized with a mesh network, and forming a multi-hop network.

US2007/013547A1 discloses a method to determine the link quality between two telemetry modules by use of a two way communication session, wherein a first telemetry module sends a query message to a second telemetry module. The second telemetry will in response to the query send a reply to the first telemetry module containing a received signal strength indicator for the query message as received by the second telemetry module. In this manner the communication session is established to enable the first telemetry module to obtain knowledge regarding how well a signal transmitted from the first telemetry module is received by the second telemetry module.

Document US 2003/0016142 A1 discloses a method for two-way telemetry, comprising transmitting query messages and receiving reply messages for measuring received signal strength indicator (RSSI) data.

In a multi-hop network a number of intermediate transmitters are involved in the transmission of a data signal from a sender (consumption meter) to a receiver (collector). These intermediate transmitters generally act either as router devices or repeater devices. A router device receives a data signal and parses the route information in the data signal or consults a routing table to extract route information, and transmits the data signal in an addressed manner to a next device in accordance with the route information.

**SUMMARY OF THE INVENTION**

It would be advantageous to achieve a system of communication nodes arranged in a network for remote collection of consumption data which in a simple manner supports a stable network. In general, the invention preferably seeks to mitigate, alleviate or eliminate one or more disadvantages of the prior art.

Accordingly, in a first aspect, there is provided a system of a plurality of consumption meters each arranged for measuring consumption data of a supplied utility, and a data collector for collecting the consumption data, the consumption meters and the data collector being arranged as nodes in a communication network

wherein a node is arranged for periodic transmission of beacon signals, the beacon signal comprising signal data related to the transmitting node;

and wherein a node determines a direct communication path between it as first node and each other second node from which it can receive the beacon signal;

wherein each first node establish a local network table comprising for each direct communication path the inbound signal strength of the second node, $R_{21}$, as received by the first node and the outbound signal strength, $R_{12}$, of the first node as received by the second node, and

wherein the inbound signal strength is the measured signal strength, $R_{21}$, of the second node as received by the first node, and

the outbound signal strength, $R_{12}$, is the estimated signal strength of the first node as received by the second node, the estimated signal strength being determined based on signal data in the beacon signal.

A system is thereby provided where communication nodes in a consumption meter network are arranged to periodically announce themselves as nodes in the network by periodically sending out beacon signals, and where nodes build local network tables by registering any nodes from where they can receive the beacons signals.

In a communication network, data messages sent from a first node to a second node are not necessarily received at the second node with the same characteristics as data messages sent from the second node to the first node are received at the first node. It is therefore advantageous for a first node to know how a message sent from the first node to the second node is received at the second node. To this end, the local network table comprising for each direct communication path the inbound signal strength of the second node as received by the first node and the outbound signal strength of the first node as received by the second node.

The inbound signal strength is obtained as the measured signal strength of signals received from the second node by the first node. An important aspect of the present invention is that a first node estimates the outbound signal strength of signals transmitted by it as received by the second node, based on signal data in the beacon signal.

In this manner, it is possible to estimate how well a second node will receive a signal from a first node based on a beacons signal, and a first node is provided with a simple means for obtaining knowledge of how well a signal from it is received at a second node without establishing a dedicated communication session between the two nodes. The estimation may be directed to obtaining signal strength, receipt error probability, etc.

In an embodiment, the outbound signal strength is further based on the measured signal strength from the signal of the second node and own transmission characteristics, and in a further embodiment the outbound signal strength is estimated based solely on the measured signal strength from signal of the second node, own transmission characteristics and on signal data in the beacon signal.

In important embodiments, the signal data is directed to transmission characteristics of the transmitting node. For example, the signal data comprises the transmitting power of the transmitting node and the general noise level of the transmitting node.

The consumption meters may in embodiments be a charging consumption meters for charging an amount of a supplied utility. The consumption meter may be an energy meter for metering an amount of energy consumed, a heat meter for district heating, a cooling meter for district cooling, a water meter for distributed water, e.g. drinking water, a gas meter and/or an electricity meter. The consumption meter may be a legal meter, i.e. a meter which is subdued to regulatory demands. Such regulatory demands may be demands to the precision of the measurements.

In a second aspect of the invention, there are provided a communication node for use in a system according to the first aspect. The communication node may be a consumption meter or a dedicated network device.

In second and third aspects, the invention is directed to a device operated as a node of the first aspect, and to a method of operating such nodes.

In general the various aspects of the invention may be combined and coupled in any way possible within the scope of the invention. These and other aspects, features and/or advantages of the invention will be apparent from and elucidated with reference to the embodiments described hereinafter.

## BRIEF DESCRIPTION OF THE DRAWINGS

Embodiments of the invention will be described, by way of example only, with reference to the drawings, in which

Fig. 1 illustrates an embodiment of a system comprising a plurality of consumption meters and a data collector;

Fig. 2 illustrates two devices operating as network nodes in a system according to embodiments of the present invention; and

Fig. 3 illustrates a flow diagram of steps used for operating a system of embodiments of the present invention.

## DESCRIPTION OF EMBODIMENTS

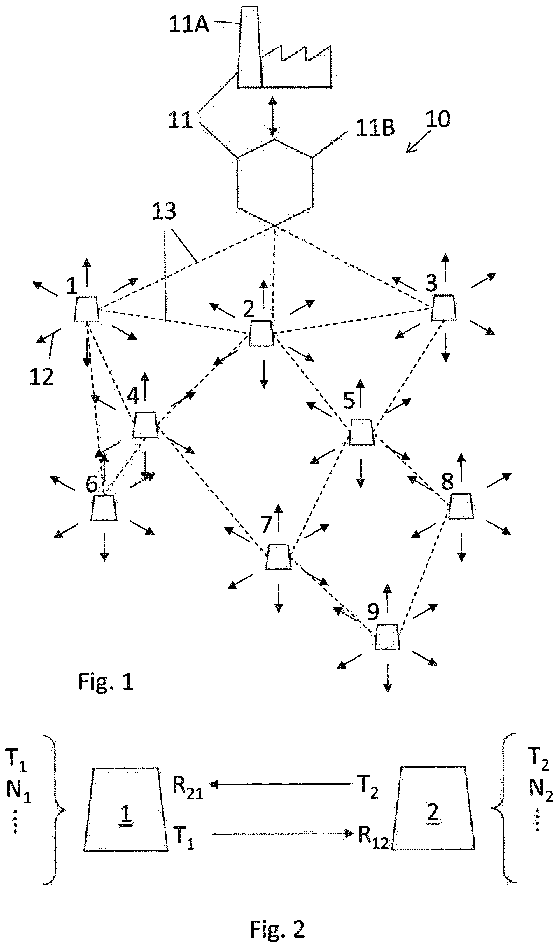

An embodiment of the invention is illustrated in Fig. 1. The figure illustrates a system 10 comprising a plurality of consumption meters 1-9 and a data collector 11, 11A, 11B, here in the form of a sub-collector and a main collector. The main collector being the collection system of the utility provider 11A, whereas the sub-collector being a concentrator unit 11B arranged as a concentrator node in the network to collect consumption data from a group of consumption meters. The total network is in an embodiment a radio network, however advantageously at least the network between the concentrator and the consumption meters is a radio network, whereas the link between the two collector parts may be of any suitable type. In general, the network may be any suitable network, including a power line carrier (PLC) network. The number of consumption meters in the plurality of meters may range from a few meters to several thousands of meters connected in the network.

To ensure a network where all nodes (i.e. the consumption meters and other network devices) are connected in a way so there is a communication path between each consumption meter and the main collector, a rather complex network often results, in particular in residential areas. For example the meters of the group 1, 2 and 3 are connected to the main collector 11 via direct link to the concentrator 11B, such a meter may be referred to as a zero level meter.

The meters of the group 4, 5 and 6 are connected to the concentrator via one or more of the zero level meters 1-3. Such meters are first level meters. The meters 7 and 8 are second level meters and the meter 9 is a third level meter. In a real large scale network, a large number of high level consumption meters may be found. The network may also be referred to as a multi-hop network. Generally the network is a hybridized network based on a number of basic topologies, including but not limited to point-to-point, star, tree and mesh as the important topology types. The illustrated meter is a hybrid network between a three network and a mesh network.

The consumption meters, e.g. in the form of electricity meters, are typically located at user's houses, where they can be mounted in-line with the supply line of electrical power into the household. Each consumption meter is arranged with a communication module or unit for transmitting the measured consumption data. The data packets are transmitted in accordance with a suitable communication protocol. In general the nodes are consumption meters with integrated network functionality, however the network nodes may also be provided by dedicated communication devices which are connected to one or more consumption meters, and moreover dedicated network devices may also be present for supporting the network, that is network devices which are not connected to a consumption meter, such as dedicated router devices or repeater devices.

In the illustrated embodiment, a node is arranged for transmission of beacon signals 12. A beacon signal is a broadcast announcement signal emitted periodically from each network node. Advantageously, the beacon is a uni-directional signal which does not trigger a response in the receiving node.

The signal data comprises device ID of the transmitting nodes as well as further data, this further data may include signal data related to operational parameters of the transmitting node.

A node which receives a beacon signal determines that a direct communication path 13 exists between it as first node and each other second node from which it can receive the beacon signal. In Fig. 1 the direct communication paths 13 are shown by dotted lines between the communication nodes, whereas the beacons 12 are indicated by arrows.

The information extracted from the received beacon signals is organised in a local network table comprising for each direct communication path the inbound signal strength of the second node as received by the first node and the outbound signal strength of the first node as received by the second node. The network table may be a neighbour list which list neighbours and associated transmission data.

Thus for the communication node 1, an example local network table is as follows:

| Link | Inbound signal strength | Outbound signal strength |
|---|---|---|
| 2 | $S_{21}$ | $S_{12}$ |
| 4 | $S_{41}$ | $S_{14}$ |
| 6 | $S_{61}$ | $S_{16}$ |
| Concentrator 11B (C) | $S_{C1}$ | $S_{1C}$ |

The inbound signal strength is the measured signal strength of the second node as received by the first node. That is $S_{21}$ is the measured signal strength of the beacon signals received from node 2 at node 1. The outbound signal strength is the estimated signal strength of the first node as received by the second node. That is $S_{12}$ is the estimated signal strength of a signal received from node 1 at node 2. An important aspect of the embodiments of the present invention, is that the estimated signal strength is determined based solely on the measured signal strength $S_{21}$ of the given signal, on own operational parameters and signal data in the beacon signal. Thus for node 1, inbound signal strength are simply measured. An important aspect is how to obtain information on how a signal sent from node 1 is received at a receiver node (node 2, 4 or 6).

Fig. 2 provides a specific example of the situation of the nodes 1 and 2. This figure is relevant for all direct node communications with the proper modifications.

The figure thus illustrates two devices. The devices may be consumption meters or other devices of the networks, such as concentrator devices, repeater devices or router devices. A device comprises a transmitting unit, a receiving unit as well as a computing unit. These units may be dedicated circuitry or functional units which share circuitry with other units.

Node 1 is in the example characterized by the operational parameters or transmission characteristics $T_1$ and $N_1$ being the transmitting power and general noise level. These parameters are known to node 1. The same goes for node 2 with transmitting power $T_2$ and general noise level $N_2$.

Node 2 transmits to node 1 a signal with signal power $T_2$. This signal is received as a measured received signal $R_{21}$ at node 1. The signal strength may be expressed in terms of signal-to-noise ratio, SNR, as: $SNR_{21} = R_{21} - N_1$, when R and N are measured in dBm.

A signal which is transmitted by node 1 with signal power $T_1$ is received as a measured received signal $R_{12}$ at

node 2, which in terms of signal-to-noise ratio is $SNR_{12} = R_{12} - N_2$.

Based on uni-directional signals, node 1 does not per se know how a signal transmitted by it is received at node 2. In the present invention, signal data is provided in the beacon signal which enables node 1 to estimate the signal strength $R_{12}$ of a signal transmitted from node 1 as received at node 2.

In an embodiment, the specific signal data which is included in the beacon signals from node 2 is the transmitting power $T_2$ and the noise level $N_2$ of the transmitting node 2. By including the noise level, the estimated signal strengths may be expressed in terms of signal-to-noise ratios.

In general, a received signal at a receiver B from a sender A may be expressed as:

$$R_{AB} = T_A + G_A + G_B - PL_{AB,}$$

where R is the received signal power, T the transmitted signal power, G the antenna gain and PL the path loss. All is measured in decibel (dB/dBm).

By use of this, the signals $R_{21}$ and $R_{12}$ are expressions as:

$$R_{21} = T_2 + G_2 + G_1 - PL_{21} \text{ and } R_{12} = T_1 + G_1 + G_2 - PL_{12}.$$

In an embodiment, it is assumed that a signal path loss for outbound signals and a signal path loss for inbound signals are identical. In this situation $G_1 + G_2 - PL$ is a given constant, K.

Thus:

$$R_{21} = T_2 + K,$$

and

$$SNR_{21} = R_{21} - N_1 = T_2 + K - N_1.$$

A signal send from node 1 is received at node 2 as:

$$R_{12} = T_1 + G_1 + G_2 - PL = T_1 + K.$$

Thus:

$$R_{12=} T_1 + R_{21} - T_2,$$

and

$$SNR_{12} = R_{12} - N_2 = T_1 + R_{21} - T_2 - N_2,$$

leading to

$$SNR_{12} = SNR_{21} + (T_1 + N_1) - (T_2 + N_2).$$

$R_{21}$ and/or $SNR_{21}$ are measured and $T_1$, $N_1$ are known, whereas $T_2$ and possible $N_2$ are obtained in the signal data. Node 1 is thereby capable of estimating $R_{12}$ and/or $SNR_{12}$ based on the measured signal strength (SNR) $S_{21}$.

In a further embodiment, in addition to own transmission characteristics ($T_1$, $N_1$) and signal data in the beacon signal ($T_2$, $N_2$), also such parameters as the antenna gains, $G_1$, $G_2$ may be provided as signal data for detailed estimation. In general, more or other parameters may be provided in the signal data for use to estimate the signal strength.

In general, a node comprises an electronic circuit with a computing unit that is capable of performing computational tasks. Such computing unit of a node may in embodiments further implement a reception algorithm which based on the signal strength is capable of determining a reception probability of a signal transmitted by the node and received by a second note. The reception probability may be expressed as the signal strength, possibly expressed in dB, which is needed to obtain a 100% hit rate, or may implement a function which based on an input in the form of the estimated signal strength outputs the estimated hit rate. A node may thereby adjust its transmitting signal strength of a signal addressed to a specific second node in accordance with a predetermined reception probability of the signal as determined by the reception algorithm.

The ability of estimating the expected hit rate may be used in connection with simple decentral power management at the nodes. In an example embodiment, the concentrator instructs the node 1 to route a data message to node 6. Node 1 computes the transmitting power which is needed to obtain a signal-to-noise level to obtain a 100% hit rate at node 6. For example, if node 1 estimates that node 6 is likely to receive the data message from node 1 with a SNR of 50 dB using the current transmitting power, and determines that a SNR of 20 dB is sufficient to obtain a 100% hit rate, it may reduce its transmitting power to reduce the SNR with 30 dB. By optimizing the transmitting power, it is assured that a transmission influences its surroundings as little as possible, and thereby provides a more power efficient network and a more stable network.

In another embodiment, a node may collect information to correlate a signal-to-noise ratio (SNR) and reception probability. The node may insert a preferred signal-to-noise ratio in to the signal data of the beacon signals thereby instructing other nodes of its preferred signal-to-noise ratio when it operates as receiver node.

Transmission of SNR values may be used in embodiments to reduce the transmission power to a minimum. For example in systems which implement data link layer retries, a first transmission could be reduces to a level where less than 100 % is expected to reach its destination, and in subsequent retries increase the transmission power to obtain a higher hit rate. In this manner the main number of transmissions is send with at a low power, resulting in increased power efficiency and reduced communication disturbances. In another example, beacon signals further comprises information relating to which other nodes a transmitting node is in direct communication with. In such a situation beacon signals from node 2 includes a listing of nodes 1, 3, 4 and 5 and beacons signals from node 4 includes a listing of nodes 1, 2 and 6.

Such additional information may be used for decentral route selection. For example, in the event node 1 is instructed to transmit a data message to node 6, but the communication link to node 6 is lost. Node 1 may analyze any of its other nodes on the local network table for any alternative routes to node 6. In this current example, node 2 does not have a direct link to node 6, but node 4 has such a direct link. Node 1 may therefore route the data message addressed to node 6 to node 4. In another example, node 1 may from the routing information in the data message determine that the route is 1→4→6, and from the network table determine that the connection to node 6 is sufficiently good for a direct transmission from 1 to 6. In this situation node 1 may decentrally determine to skip node 4, and thereby optimizing the route by one hop.

In general, any suitable information may be included as signal data in the beacon signals. Such information may include but is not limited to: is the node capable of forward-error-correction, extended frame length, or other information which may be used by the transmitting node in a decentral decision process in connection with routing of data messages in the network.

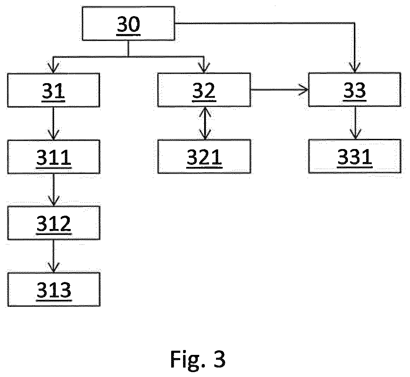

Fig. 3 illustrates a flow diagram of steps used for operating a system of embodiments of the present invention.

The figure illustrates steps performed by a node of the communication network.

The node is configured 30 to operate a transmitting unit to periodic transmit beacon signals 31 comprising signal data related to the transmitting node. This step comprises the sub-steps of retrieving 311 the signal data from relevant storage locations, inserting 312 the signal data into the data message, and operating 313 to emit the beacon signal. The period between the beacons signal can be set according to a desired time resolution, typically the period will be between a few seconds and a few minutes, such as every 16 seconds, every 32 seconds, every 128 seconds.

Concurrently with operating the transmitting unit, the node is configured to operate 32 a receiving unit to receive beacon signals transmitted from other nodes (second nodes). Upon receipt of a beacon signal, the receiving unit process 321 the received signal to determine whether or not it originates from another node in the network, and if this is the case a direct communication path is present between it as first node and the other second node from which it received the beacon signal.

The node is further configured to operate 33 a computing unit to establish 331 the local network table comprising the inbound signal strengths and the outbound signal strengths. The computing unit is further properly programmed to estimate the outbound signal strength based on data signal data of the beacon signal, as well as further computational tasks used in connection with operating the communication network.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

**Claims**

1. A device for communicating signals relating to consumption data of a supplied utility, the device being arranged as a first node in a communication network;
   wherein a node comprises a transmitting unit arranged for periodic transmission of beacon signals, the beacon signal comprising signal data related to the transmitting node itself; wherein the node comprises a receiving unit arranged for receiving beacon signals transmitted from second nodes and determining a direct communication path between it as first node and each other second node from which it can receive the beacon signal; wherein the first node comprises a computing unit configured to determine the inbound signal strength of a second node ($R_{21}$), as received by the first node and the outbound signal strength ($R_{12}$), of the first node as received by the second node, and wherein the inbound signal strength is the measured signal strength ($R_{21}$), of the beacon signal received from the second node as received by the first node,
   **characterized in that**
   the outbound signal strength ($R_{12}$), is the estimated signal strength of signals from the first node as received by the second node, the estimated signal strength being determined in the first node based on; the outbound transmission power of the first node ($T_1$), the inbound signal strength ($R_{21}$) of beacon signals from the second node as received by the first node, and the transmission power of the second node ($T_2$) determined based on signal data in the beacon signal received from the second node.

2. The device according to claim 1, wherein the signal data related to the transmitting node further comprises at least one of the noise level of the transmitting node and antenna gain of the transmitting node.

3. The device according to any of the preceding claims, wherein the first node comprises a computing unit which implements a reception algorithm to determine a reception probability of a signal transmitted by the first node and received by the second note based on transmitting signal strength ($R_{12}$).

4. The device according to claim 3, wherein the transmitting signal strength of a signal addressed to a specific second node is adjusted in accordance with a predetermined reception probability of the signal as determined by the reception algorithm.

5. The device according to any of the preceding claims, wherein the signal data related to the transmitting node comprises a preferred signal-to-noise ratio of the transmitting node when operating as receiver node.

6. The device according to claim 5, wherein the transmitting signal strength of a signal addressed to a specific second node is adjusted in accordance with the preferred signal-to-noise ratio.

7. The device according to any of the claims 5 or 6 wherein the transmitted signal strength of a signal addressed to a specific second node is transmitted with a signal-to-noise ratio with an expected hit rate being lower than 100%, and wherein subsequent retries are transmitted with a signal strength which is higher than the previous used signal strength.

8. The device according to any of the preceding claims wherein the signal data related to the transmitting node comprises information relating to which other nodes a transmitting node is in direct communication with.

9. The device according to any of the preceding claims, wherein the beacon signals are transmitted in a uni-directional manner.

10. A system of a plurality of devices according to any of the preceding claims, the devices being consumption meters, and a data collector for collecting consumption data from the consumption meters, the consumption meters and the data collector being arranged as nodes in the communication network.

11. A method of operating a device for communicating signals relating to consumption data of a supplied utility, the device being arranged as a first node in a communication network;
    wherein the first node is configured to:

    operate a transmitting unit to periodic transmit beacon signals, the beacon signal comprising signal data related to the transmitting node itself;
    operate a receiving unit to receive beacon signals transmitted from a second node, and determine a direct communication path between it as first node and each other second node from which it can receive the beacon signal;

operate a computing unit to determine the inbound signal strength of the second node ($R_{21}$), as received by the first node and the outbound signal strength ($R_{12}$), of the first node as received by the second node, and wherein the inbound signal strength is the measured signal strength ($R_{21}$), of the beacon signal received from the second node as received by the first node,

**characterized in that**
the outbound signal strength ($R_{12}$), is the estimated signal strength of signals from the first node as received by the second node, the estimated signal strength being determined in the first node based on; the outbound transmission power of the first node ($T_1$), the inbound signal strength ($R_{21}$) of beacon signals from the second node as received by the first node, and the transmission power of the second node ($T_2$) determined based on signal data in the beacon signal received from the second node.

**Patentansprüche**

1. Vorrichtung zum Kommunizieren von Signalen in Bezug auf Verbrauchsdaten eines bereitgestellten Versorgungsgutes, wobei die Vorrichtung als ein erster Knoten in einem Kommunikationsnetzwerk angeordnet ist;

   wobei ein Knoten eine Übertragungseinheit umfasst, die zur periodischen Übertragung von Bakensignalen angeordnet ist, wobei das Bakensignal Signaldaten in Bezug auf den Übertragungsknoten selbst umfasst;

   wobei der Knoten eine Empfangseinheit umfasst, die zum Empfangen von Bakensignalen, die von zweiten Knoten übertragen werden, und zum Bestimmen eines direkten Kommunikationspfads zwischen diesem als ersten Knoten und jedem anderen zweiten Knoten, von dem er das Bakensignal empfangen kann, angeordnet ist;

   wobei der erste Knoten eine Recheneinheit umfasst, die dazu konfiguriert ist, die eingehende Signalstärke eines zweiten Knotens ($R_{21}$), wie durch den ersten Knoten empfangen, und die ausgehende Signalstärke ($R_{12}$) des ersten Knotens, wie durch den zweiten Knoten empfangen, zu bestimmen, und

   wobei die eingehende Signalstärke die gemessene Signalstärke ($R_{21}$) des von dem zweiten Knoten empfangenen Bakensignals ist, wie durch den ersten Knoten empfangen,

   **dadurch gekennzeichnet, dass**
   die ausgehende Signalstärke ($R_{12}$) die geschätzte Signalstärke von Signalen von dem ersten Knoten ist, wie durch den zweiten Knoten empfangen, wobei die geschätzte Signalstärke in dem ersten Knoten auf Grundlage von Folgendem bestimmt ist: der ausgehenden Übertragungsleistung des ersten Knotens ($T_1$), der eingehenden Signalstärke ($R_{21}$) von Bakensignalen von dem zweiten Knoten, wie durch den ersten Knoten empfangen, und der Übertragungsleistung des zweiten Knotens ($T_2$), bestimmt auf Grundlage von Signaldaten in dem von dem zweiten Knoten empfangenen Bakensignal.

2. Vorrichtung nach Anspruch 1, wobei die Signaldaten in Bezug auf den Übertragungsknoten ferner zumindest eines von dem Rauschpegel des Übertragungsknotens und dem Antennengewinn des Übertragungsknotens umfassen.

3. Vorrichtung nach einem der vorhergehenden Ansprüche, wobei der erste Knoten eine Recheneinheit umfasst, die einen Empfangsalgorithmus implementiert, um eine Empfangswahrscheinlichkeit eines durch den ersten Knoten übertragenen und durch den zweiten Knoten empfangenen Signals auf Grundlage der Übertragungssignalstärke ($R_{12}$) zu bestimmen.

4. Vorrichtung nach Anspruch 3, wobei die Übertragungssignalstärke eines Signals, das an einen spezifischen zweiten Knoten adressiert ist, gemäß einer vorbestimmten Empfangswahrscheinlichkeit des Signals, wie durch den Empfangsalgorithmus bestimmt, eingestellt ist.

5. Vorrichtung nach einem der vorhergehenden Ansprüche, wobei die Signaldaten in Bezug auf den Übertragungsknoten ein bevorzugtes Signal-Rausch-Verhältnis des Übertragungsknotens umfassen, wenn als Empfängerknoten betrieben.

6. Vorrichtung nach Anspruch 5, wobei die Übertragungssignalstärke eines Signals, das an einen spezifischen zweiten Knoten adressiert ist, gemäß dem bevorzugten Signal-Rausch-Verhältnis eingestellt ist.

7. Vorrichtung nach einem der Ansprüche 5 oder 6, wobei die übertragene Signalstärke eines Signals, das an einen spezifischen zweiten Knoten adressiert ist, mit einem Signal-Rausch-Verhältnis mit einer erwarteten Trefferquote unter 100 % übertragen wird, und wobei nachfolgende Wiederholungen mit einer Signalstärke übertragen werden, die höher als die zuvor verwendete Signalstärke ist.

8.  Vorrichtung nach einem der vorhergehenden Ansprüche, wobei die Signaldaten in Bezug auf den Übertragungsknoten Informationen in Bezug darauf umfassen, mit welchen anderen Knoten ein Übertragungsknoten in direkter Kommunikation steht.

9.  Vorrichtung nach einem der vorhergehenden Ansprüche, wobei die Bakensignale auf eine unidirektionale Weise übertragen werden.

10. System aus einer Vielzahl von Vorrichtungen nach einem der vorhergehenden Ansprüche, wobei die Vorrichtungen Verbrauchsmessgeräte sind, und einem Datensammler zum Sammeln von Verbrauchsdaten aus den Verbrauchsmessgeräten, wobei die Verbrauchsmessgeräte und der Datensammler als Knoten in dem Kommunikationsnetzwerk angeordnet sind.

11. Verfahren zum Betreiben einer Vorrichtung zum Kommunizieren von Signalen in Bezug auf Verbrauchsdaten eines bereitgestellten Versorgungsgutes, wobei die Vorrichtung als ein erster Knoten in einem Kommunikationsnetzwerk angeordnet ist;
    wobei der erste Knoten für Folgendes konfiguriert ist:

    eine Übertragungseinheit zu betreiben, um Bakensignalen periodisch zu übertragen, wobei das Bakensignal Signaldaten in Bezug auf den Übertragungsknoten selbst umfasst;
    eine Empfangseinheit zu betreiben, um Bakensignale, die von einem zweiten Knoten übertragen werden, zu empfangen, und um einen direkten Kommunikationspfad zwischen diesem als ersten Knoten und jedem anderen zweiten Knoten, von dem er das Bakensignal empfangen kann, zu bestimmen;
    eine Recheneinheit zu betreiben, um die eingehende Signalstärke des zweiten Knotens ($R_{21}$), wie durch den ersten Knoten empfangen, und die ausgehende Signalstärke ($R_{12}$) des ersten Knotens, wie durch den zweiten Knoten empfangen, zu bestimmen, und
    wobei die eingehende Signalstärke die gemessene Signalstärke ($R_{21}$) des von dem zweiten Knoten empfangenen Bakensignals ist, wie durch den ersten Knoten empfangen,

    **dadurch gekennzeichnet, dass**
    die ausgehende Signalstärke ($R_{12}$) die geschätzte Signalstärke von Signalen von dem ersten Knoten ist, wie durch den zweiten Knoten empfangen, wobei die geschätzte Signalstärke in dem ersten Knoten auf Grundlage von Folgendem bestimmt ist: der ausgehenden Übertragungsleistung des ersten Knotens ($T_1$), der eingehenden Signalstärke ($R_{21}$) von Bakensignalen von dem zweiten Knoten, wie durch den ersten Knoten empfangen, und der Übertragungsleistung des zweiten Knotens ($T_2$), bestimmt auf Grundlage von Signaldaten in dem von dem zweiten Knoten empfangenen Bakensignal.

**Revendications**

1.  Dispositif destiné à la communication de signaux relatifs aux données de consommation d'une commodité fournie, ledit dispositif étant agencé en tant que premier nœud dans un réseau de communication ;
    un nœud comprenant une unité d'émission agencée en vue d'émettre périodiquement des signaux de balise, ledit signal de la balise comprenant des données de signal associées au nœud d'émission lui-même ;
    ledit nœud comprenant une unité de réception agencée pour recevoir des signaux de balise émis par des seconds nœuds et déterminer une voie de communication directe entre celui-ci en tant que premier nœud et chaque autre second nœud en provenance duquel il peut recevoir le signal de balise ;
    ledit premier nœud comprenant une unité de calcul configurée pour déterminer l'intensité de signal entrant d'un second nœud ($R_{21}$), telle qu'elle est reçue par le premier nœud et l'intensité de signal sortant ($R_{12}$), du premier nœud telle qu'elle est reçue par le second nœud, et
    ladite intensité de signal entrant étant l'intensité de signal mesurée ($R_{21}$) du signal de balise reçu en provenance du second nœud telle qu'elle est reçue par le premier nœud,
    **caractérisé en ce que**
    l'intensité de signal sortant ($R_{12}$) étant l'intensité de signal estimées des signaux provenant du premier nœud telle qu'elle est reçue par le second nœud, l'intensité de signal estimée étant déterminée dans le premier nœud sur la base de : la puissance d'émission sortante du premier nœud ($T_1$), l'intensité de signal entrant ($R_{21}$) des signaux

de balise provenant du second noeud telle qu'elle est reçue par le premier noeud et la puissance d'émission du second noeud ($T_2$) déterminée sur la base de données de signal dans le signal de balise reçu en provenance du second noeud.

2. Dispositif selon la revendication 1, lesdites données de signal associées au noeud d'émission comprenant en outre au moins l'un du niveau de bruit du noeud d'émission et du gain d'antenne du noeud d'émission.

3. Dispositif selon l'une quelconque des revendications précédentes, ledit premier noeud comprenant une unité de calcul mettant en oeuvre un algorithme de réception afin de déterminer une probabilité de réception d'un signal émis par le premier noeud et reçu par le second noeud sur la base de l'intensité de signal émis ($R_{12}$).

4. Dispositif selon la revendication 3, ladite intensité de signal d'émission d'un signal adressé à un second noeud spécifique étant réglée selon une probabilité de réception prédéfinie du signal telle que déterminée par l'algorithme de réception.

5. Dispositif selon l'une quelconque des revendications précédentes, lesdites données de signal associées au noeud d'émission comprenant un rapport signal-bruit préféré du noeud d'émission lorsqu'il fonctionne en tant que noeud récepteur.

6. Dispositif selon la revendication 5, ladite intensité de signal d'émission d'un signal adressé à un second noeud spécifique étant réglée selon le rapport signal-bruit préféré.

7. Dispositif selon l'une quelconque des revendications 5 ou 6, ladite intensité de signal émis d'un signal adressé à un second noeud spécifique étant émise avec un rapport signal-bruit avec un taux de succès prévu inférieur à 100 %, et lesdites tentatives ultérieures étant émises avec une intensité de signal qui est supérieure à l'intensité de signal précédente utilisée.

8. Dispositif selon l'une quelconque des revendications précédentes, lesdites données de signal associées au noeud d'émission comprenant des informations relatives aux autres noeuds avec lesquels un noeud d'émission est en communication directe.

9. Dispositif selon l'une quelconque des revendications précédentes, lesdits signaux de balise étant émis de manière unidirectionnelle.

10. Système d'une pluralité de dispositifs selon l'une quelconque des revendications précédentes, lesdits dispositifs étant des compteurs de consommation et un collecteur de données destiné à recueillir des données de consommation provenant des compteurs de consommation, lesdits compteurs de consommation et ledit collecteur de données étant agencés sous forme de noeuds dans le réseau de communication.

11. Procédé de fonctionnement d'un dispositif destiné à la communication de signaux relatifs aux données de consommation d'une commodité fournie, ledit dispositif étant agencé en tant que premier noeud dans un réseau de communication ;
ledit premier noeud étant configuré pour :

exploiter une unité d'émission pour émettre de façon périodique des signaux de balise, ledit signal de balise comprenant des données de signal relatives au noeud d'émission lui-même ;
exploiter une unité de réception pour recevoir des signaux de balise émis à partir d'un second noeud et déterminer une voie de communication directe entre celui-ci en tant que premier noeud et chaque autre second noeud duquel il peut recevoir le signal de balise ;
exploiter une unité de calcul pour déterminer l'intensité du signal entrant du second noeud ($R_{21}$), telle qu'elle est reçue par le premier noeud et l'intensité du signal sortant ($R_{12}$) du premier noeud telle qu'elle est reçue par le second noeud, et
ladite intensité de signal entrant étant l'intensité de signal mesurée ($R_{21}$) du signal de balise reçu en provenance du second noeud telle qu'elle est reçue par le premier noeud,

**caractérisé en ce que**
l'intensité de signal sortant ($R_{12}$), est l'intensité de signal estimée des signaux, provenant du premier noeud, telle qu'elle est reçue par le second noeud, ladite intensité de signal estimée étant déterminée dans le premier noeud sur la base de : la puissance d'émission sortante du premier noeud ($T_1$), l'intensité de signal entrant ($R_{21}$) des signaux de balise provenant du second noeud telle qu'elle est reçue par le premier noeud, et la puissance d'émission du second noeud ($T_2$) déterminée sur la base des données de signal dans le signal de balise reçu du second noeud.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007013547 A1
- US 20030016142 A1